# EUROPÄISCHE PATENTSCHRIFT

(11) **EP 0 405 239 B1**
(45) Veröffentlichungstag und Bekanntmachung des Hinweises auf die Patenterteilung: **07.09.1994**
(21) Anmeldenummer: 90111256.5
(22) Anmeldetag: 14.06.1990
(51) Int. Cl.: C08G 69/06, C08G 69/16, C08G 69/28, C08G 69/36

(54) **Verfahren zur Herstellung hochmolekularer Copolyamide**
Process for preparation of high molecular copolyamides
Procédé pour la préparation de copolyamides avec poids moléculaire éléve

(30) Priorität: 28.06.1989 DE 3921164
(43) Veröffentlichungstag der Anmeldung: 02.01.1991
(73) Patentinhaber: BAYER AG, 51368 Leverkusen (DE)
(72) Erfinder: Horn, Klaus, Dr., D-4150 Krefeld (DE); Heinz, Hans-Detlef, Dr., D-4150 Krefeld 11 (DE); Müller, Peter-Rolf, Dr., D-5090 Leverkusen (DE); Dujardin, Rolf, Dr., D-4150 Krefeld (DE)

(56) Entgegenhaltungen:
- EP-A- 0 288 894
- EP-A- 0 360 060
- DE-A- 1 951 225
- DIE ANGEWANDTE MAKROMOLEKULARE CHEMIE Band 122, Juni 1984, Seiten183-191, Basel, Heidelberg, New York; R. GARVANSKA et al.: "Herstellung von Polycapronamid in Anwesenheit von ethoxyliertem Ethylendiamin"
- Derwent Publications Ltd, London, GB; DATABASE WPIaccession no. 70-67743R, week37; & JP-A-45029514

## Beschreibung

Die Erfindung betrifft durch Polykondensation von Lactamen und/oder polyamidbildenden Diamin/Dicarbonsäure-Reaktionsgemischen und/oder Aminosäuren in Gegenwart kleiner Mengen spezieller Diaminoalkohole und in etwa äquivalenten Mengen an Polycarbonsäuren (vorzugsweise Dicarbonsäuren) hergestellte, hochmolekulare, thermoplastisch verformbare, verzweigte aliphatische Polyamide sowie ein Verfahren zu ihrer Herstellung, das sich durch erheblich verkürzte Polykondensationszeiten auszeichnet, ohne daß sich vernetzte Produkte bilden. Das Verfahren benutzt gegebenenfalls zusätzlich eine Festphasen-Nachkondensation, wobei eine schnelle Weiterkondensation zu zwar verzweigten, aber m-Kresol-löslichen Produkten miterhöhter Schmelzviskosität erfolgt.

Polyamide sind eine seit vielen Jahren für eine Vielzahl praktischer Anwendungen bewährte Klasse von Polymeren, die nach verschiedenen Verfahren hergestellt werden können, die aus sehr unterschiedlichen polyamidbildenden Bausteinen synthetisiert werden können und die im speziellen Anwendungsfall allein oder auch in Kombination mit Verarbeitungshilfsmitteln, polymeren Legierungspartnern oder auch mineralischen Verstärkungsmaterialien (wie z.B. Füllstoffe oder Glasfasern) zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch verwendet.

Während Lactame kationisch, hydrolytisch (mit Wasserzusatz) oder auch anionisch zu Polyamiden umgewandelt werden können, kommt für die Polyamid-Herstellung aus polyamidbildenden Monomeren wie Diaminen, Dicarbonsäuren bzw. geeigneten Derivaten und Aminocarbonsäuren, auch in Kombination mit Lactamen, im wesentlichen nur die Polykondensationsreaktion in Frage (siehe Vieweg, Müller; Kunststoff-Handbuch, Bd. VI, S. 11 ff, Carl-Hanser Verlag, München 1966).

Auch bei der Herstellung von Polyamiden aus Lactamen, z.B. von Polyamid-6 aus ε-Caprolactam, hat die "hydrolytische Polymerisation" die größte Bedeutung (s. EP-A.288894).

Zur Herstellung der Polyamide sind eine Vielzahl von Verfahrensweisen bekannt geworden, wobei je nach gewünschtem Endprodukt unterschiedliche Monomerbausteine zur Bestimmung der Matrixnatur, verschiedene Kettenregler zur Einstellung eines angestrebten mittleren Molgewichts oder auch Monomere mit "reaktiven" Gruppen für später beabsichtigte Nachbehandlungen (z.B. Aminogruppen oder Sulfonatgruppen zur besseren Anfärbbarkeit von Fasern mit sauren bzw. basischen Farbstoffen) eingesetzt werden.

Kontinuierliche Herstellungsverfahren sind ebenso bekannt wie die diskontinuierliche Produktion, z.B. in Autoklaven.

Allen Methoden zur Herstellung von (Co)Polyamiden durch Polykondensation bzw. durch hydrolytische Polymerisation der Lactame und/oder polyamidbildenden Diamin/Dicarbonsäure-Reaktionsgemischen ist jedoch gemeinsam, daß ausgehend von geeigneten Monomermischungen die Herstellung der (Co)Polyamide meist viele Stunden Reaktionszeit in Anspruch nimmt, bis die Polyamide zum Abspinnen von Strängen aus der Polymerschmelze ausreichend hohe Molgewichte erreicht haben bzw. die Molgewichte für den geplanten Praxiseinsatz ausreichend hoch sind.

Unabhängig von der langen Reaktionszeit ist in vielen Fällen noch eine Nachkondensation - z.B. in der Festphase - erforderlich, um noch höhere Molgewichte zu erzielen. Diese bedingt zwangsläufig - wegen der relativ geringen Reaktionsgeschwindigkeit - verhältnismäßig lange Nachkondensationszeiten bei relativ hohen Temperaturen, welche oft schädigend (Farbe, Oxidation, Gelteilchenbildung) wirken.

Die zur Herstellung der (Co)Polyamide erforderlichen langen Reaktionszeiten begrenzen somit gravierend die Kapazität der Herstellanlagen und sind insbesondere, da die Reaktion bei Temperaturen von über 200° C, meist über 250° C, immer aber oberhalb des Schmelzpunktes des herzustellenden Produktes erfolgen muß, in hohem Maße energieverbrauchend und kostspielig. Eine wesentliche Verkürzung der Reaktionszeiten bei der Herstellung von (Co)Polyamiden - ohne Verzicht auf die bekannten guten anwendungstechnischen Eigenschaften der Produkte - wäre somit als großer, insbesondere kosten- und energiesparender Fortschritt anzusehen.

Überraschend wurde nun gefunden, daß die Polykondensationszeit zur Herstellung von (Co)Polyamiden aus Lactamen und/oder polyamidbildenden Diamin/Dicarbonsäure-Reaktionsgemischen und/oder Aminosäuren drastisch verkürzt werden kann, wenn man den polyamidbildenden Ausgangsmonomeren kleine Mengen spezieller Diaminoalkohole und dazu in etwa äquivalente Mengen einer Polycarbonsäure, vorzugsweise Dicarbonsäure, zusetzt. Die Äquivalenz wird dabei auf Amin-Gehalte berechnet.

Die Herstellung von Polycapronamid in Anwesenheit von ethoxyliertem Ethylendiamin ist zwar in der Literatur beschrieben (Radka Garvanska, Rumjana Lasarova und Kiril Diov, Angew. Makrom Chemie 122 (1984), S. 183-191), das ethoxylierte Diamin wurde allerdings in Mengen von 1 bis 8 Gew-% und ohne äquivalente Menge Polycarbonsäure eingesetzt, um den spezifischen Widerstand im Vergleich zum unmodifizierten Polyamid zu verringern. Das so erhaltene Polyamid hat nach 8 Stunden Polykondensationszeit eine geringere relative Viskosität als nicht modifiziertes Polyamid.

Es ist daher vollkommen unerwartet, daß Diaminoalkohole in katalytischen Mengen von unter 1 Gew.-% im Gemisch mit äquivalenten Mengen an Polycarbonsäuren, vorzugsweise Dicarbonsäuren, die Polyamidbildung beschleunigen und sogar zu Polyamiden höherer relativer Viskosität und Schmelzviskosität führen, die in m-Kresol einwandfrei löslich sind.

Unabhängig von der eigentlichen Herstellung der Polyamide ist allerdings für viele Anwendungen, welche noch höhermolekulare Produkte erfordern, z.B. die Extrusion zu Folien oder Halbzeug, eine weitere Steigerung des Molekulargewichts erforderlich. Dies kann in den üblicherweise eingesetzten Polykondensationsanlagen, z.B. Autoklaven bei diskontinuierlicher Produktion oder VK-Rohren bei kontinuierlicher Produktion, nur schlecht erfolgen, da die stark ansteigende Schmelzviskosität zu verschiedenen Problemen führt. So wird die Temperaturführung sowie die Entfernung des Reaktionswassers immer schwieriger, und die große Reaktionszeit bei den notwendigen Temperaturen führt in verstärktem Maße zu Nebenreaktionen und Gelteilchenbildung, die die Qualität des Endproduktes drastisch verschlechtern können. Auch das Abspinnen wird zunehmend schwieriger bei sehr hohen Schmelzviskositäten.

Hier bietet die Festphasennachkondensation entscheidende Vorteile. Aufgrund der weitaus geringeren Reaktionstemperaturen (ca. 160 bis 200° C, je nach Polyamid, im Vergleich zu 250 bis 280° C bei der Schmelzkondensation) wird die Gefahr unerwünschter Nebenreaktionen und Vergelung reduziert; die Tatsache, daß es sich bei dem nachzukondensierenden Material um definierte Partikel mit vorhandenem Zwischenteilchenvolumen handelt, erleichtert zusammen mit der Variante, das Granulat kontinuierlich zu bewegen, z.B. in Taumeltrocknern, die Aufrechterhaltung einer gleichmäßigen Reaktionstemperatur sowie die Entfernung des Reaktionswassers. Da es sich um Partikel handelt, kommt es auch nicht zu Abspinnproblemen.

Das Festphasennachkondensations-Verfahren wird zwar industriell in großem Maße zur Herstellung höhermolekularer Polyamide eingesetzt, dennoch beinhaltet auch dieses Verfahren eine Reihe von Nachteilen, die ihre Ursache in der relativ niedrigen Nachkondensationsgeschwindigkeit haben. So erfordert das übliche Nachkondensationsverfahren immer noch einen hohen Zeit- und Energieaufwand. Aufgrund der beträchtlichen Verweilzeit bei Reaktionstemperatur ist das Verfahren außerdem in hohem Maße anlageintensiv.

Überraschend wurde weiterhin gefunden, daß die erfindungsgemäßen, mit speziellen Diaminoalkoholen/Polycarbonsäuren modifizierten Polyamide sich in der festen Phase rasch zu hochmolekularen Produkten nachkondensieren lassen. Dieser Effekt ist - trotz der Tatsache, daß die eigentliche Schmelzpolykondensation durch Diaminoalkohole beschleunigt wird - unerwartet und nicht vorhersehbar gewesen, da bekanntlich die Schmelzepolykondensation und die Festphasennachkondensation ganz verschiedenen Gesetzmäßigkeiten und Mechanismen folgen (siehe z.B. R.J. Gaymans, J. Amirtharaj, H. Kamp J. Appl. Polym. Sci 27, 2513-2526, (1984); L.B. Sokolov, Solid Phase Polymerization, Syntheses by Polycondensation Publ. Israel Programm for Scientific Translation, 1968).

Weiter wurde gefunden, daß hochmolekulare, wahrscheinlich etwas verzweigte (Co)Polyamide mit deutlich erhöhter Schmelzviskosität gegenüber Diaminoalkohol-freien (Co)Polyamiden erhalten werden, wenn man eine Festphasennachkondensation mit erheblich verkürzter Reaktionszeit und/oder niedrigeren Temperaturen durchführt.

Gegenstand der Erfindung ist daher ein Verfahren zur Herstellung hochmolekularer, m-Kresol löslicher (Co)Polyamide auf Basis von Lactamen und/oder polyamidbildenden Diamin/ Dicarbonsäure-Reaktionsgemischen und/oder Aminosäuren unter Zusatz von Diaminoalkoholen, unter Schmelzkondensationsbedingungen, gegebenenfalls zusätzlicher Fesphasennachkondensation,
dadurch gekennzeichnet, daß der zu polymerisierenden, polyamidbildenden Mischung
a) 0,005 bis 0,99 Gew.-%, vorzugsweise 0,01 bis 0,95 Gew.-% und besonders bevorzugt 0,02 bis 0,5 Gew.-%, eines oder mehrerer Diaminoalkohole der allgemeinen Formel (I) 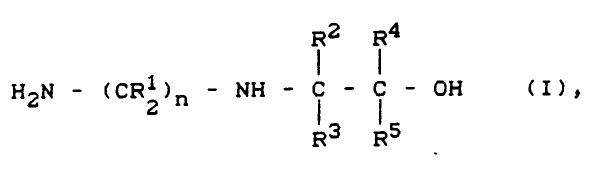 wobei
   - R¹, R², R³, R⁴ und R⁵: unabhängig voneinander Wasserstoff, C₁-C₁₂-Alkyl (wenn Alkyl, so vorzugsweise Methyl), besonders bevorzugt Wasserstoff, bedeuten und zwei am gleichen oder benachbarten Kohlenstoffatom befindliche Reste R¹ und/oder R³ und/oder R⁵ auch Glieder eines 5 bis 12 Kohlenstoffatome zählenden Ringes sein können, und
   - n: eine natürliche Zahl von 2 bis 22, bevorzugt 2, ist, und
b) in zu den Aminogruppen von (I) etwa äquivalente Mengen einer oder mehrerer Polycarbonsäuren, bevorzugt einer Dicarbonsäure,
zugesetzt werden und anschließend in üblicher Weise kondensiert wird.

Gegenstand der Erfindung sind auch hochmolekulare (Co)Polyamide auf Basis von Lactamen und/oder polyamidbildenden Diamin/Dicarbonsäure-Reaktionsgemischen und/oder Aminosäuren, dadurch gekennzeichnet, daß sie
a) 0,005 bis 0,99 Gew.-% Einheiten abgeleitet von Diaminoalkoholen der allgemeinen Formel (I) 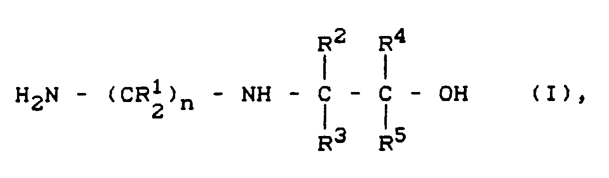 wobei
   - R¹, R², R³, R⁴ und R⁵: Wasserstoff oder C₁-C₁₂-Alkyl (wenn Alkyl, so vorzugsweise Methyl), besonders bevorzugt Wasserstoff, bedeutet, oder auch zwei am gleichen oder benachbarten Kohlenstoffatom befindliche Reste R¹ und/oder R³ und/oder R⁵ auch Glieder eines 5 bis 12 C-Atome zählenden Ringes sein können, und
   - n: 2 bis 22, bevorzugt 2, ist, und
b) in zu den Aminogruppen von I in etwa äquivalente Mengen einer oder mehrerer Polycarbonsäuren, bevorzugt einer Dicarbonsäure,
einkondensiert enthalten.

Weiterer Erfindungsgegenstand ist die Verwendung dieser hochmolekularen (Co)Polyamide zur Herstellung von Formkörpern, beispielsweise durch Spritzguß, Folien, Fasern und anderen Gegenständen.

Als Lactame im Sinne der Erfindung sind Lactame mit 5 bis 13 Ringgliedern, vorzugsweise 5 bis 12 Methylengruppen im Lactamring, wie z.B. Caprolactam, Önanthlactam, Capryllactam und Laurinlactam allein oder im Gemisch geeignet; vorzugsweise werden ε-Caprolactam und Laurinlactam eingesetzt. Besonders bevorzugt wird ε-Caprolactam verwendet.

Als polyamidbildende, aliphatische Dicarbonsäuren sind Dicarbonsäuren mit 6 bis 40 C-Atomen, vorzugsweise mit 6 bis 12 und 36-38 C-Atomen, geeignet. Beispiele sind Adipinsäure, Pimelinsäure, Trimethyladipinsäure, Octandisäure, Azelainsäure, Sebacinsäure, Dodecandisäure, Heptadecandicarbonsäuren (-1,8- und -1,9-Gemisch), Dimerfettsäuren, (C₃₆ hydriert und nicht hydriert); bevorzugt sind Adipinsäure, Azelainsäure, Sebazinsäure, Dodecandisäure und Dimerfettsäuren. Es können anteilweise auch aromatische Dicarbonsäuren, wie Isophthalsäure oder Terephthalsäure, mitverwendet werden.

Beispiele für aliphatische Diamine sind jene mit 4 bis 12 C-Atomen, wie z.B. 1,4-Diaminobutan, Hexamethylendiamin, Octamethylendiamin, Trimethylhexamethylendiamine, Decamethylendiamin, Isophorondiamin, bevorzugt Hexamethylendiamin und Trimethylhexamethylendiamine.

Außer den genannten Dicarbonsäuren und Diaminen sind auch Dicarbonsäuren und Diamine geeignet, deren Alkylenketten Sauerstoffatome enthalten, so z.B. 1,8-Diamino-3,6-dioxaoctan, 1,11-Diamino-3,6,9-trioxaundecan, 3,6-Dioxa-heptansäure. Beispiele für Aminosäuren sind jene mit mindestens 5 C-Atomen zwischen der Amino- und der Carboxylfunktion, vorzugsweise 6-Aminohexansäure, 11-Aminoundecansäure und 12-Aminododecansäure.

Die Diamin/Dicarbonsäure-Gemische können wahlweise jede Komponente für sich oder vorzugsweise, wie allgemein bekannt, aus Gründen einer sicheren Stöchiometrie als zuvor hergestellte Dicarbonsäure-Diamin-Salze (z.B. AH-Salz aus Adipinsäure und Hexamethylendiamin), gegebenenfalls in wäßriger oder anderer Lösung, eingesetzt werden.

Mitverwendung üblicher Kettenabbrecher, z.B. monofunktioneller Carbonsäuren oder Amine, z.B. Essigsäure, Hexansäure, Benzoesäure, Cyclohexancarbonsäure, Stearinsäure, Hexylamin bzw. Cyclohexylamin, ist in üblichen Mengen möglich.

Beispiele für die erfindungsgemäß einzusetzenden Diaminoalkohole (I) sind: N-(2-Hydroxyethyl)-ethylendiamin, N-(2-Hydroxyethyl)-propan-1,3-diamin, N-(2-Hydroxyethyl)-butan-1,4-diamin, N-(2-Hydroxyethyl)-pentan-1,5-diamin, N-(2-Hydroxyethyl)-hexan-1,6-diamin, N-(2-Hydroxyethyl)-octan-1,8-diamin, N-(2-Hydroxyethyl)-decan-1,10-diamin und N-(2-Hydroxyethyl)-dodecan-1,12-diamin. Besonders bevorzugt wird N-(2-Hydroxyethyl)-ethylendiamin verwendet.

Die Verbindungen sind bekannt (z.B. Beilstein 4, IV, 2449) oder können nach bekannten Verfahren hergestellt werden.

Geeignete Polycarbonsäuren zur Kombination mit den Diaminoalkoholen sind vorzugsweise aliphatische Dicarbonsäuren mit 6 bis 12 C-Atomen, aromatische Dicarbonsäuren mit 8 bis 18 C-Atomen, so z.B. Adipinsäure, Trimethyladipinsäure, Suberinsäure, Azelainsäure, Sebacinsäure, Dodecandisäure, Isophthalsäure, Hexahydroterephthalsäure, Terephthalsäure. Besonders bevorzugt werden Adipinsäure, Sebacinsäure, Azelainsäure und Isophthalsäure eingesetzt.

Monocarbonsäuren wie Essigsäure oder Benzoesäure und andere können in üblichen Mengen eingesetzt werden.

Zur Beschleunigung der Polykondensation sind 0,005 bis 0,99 Gew.-%, vorzugsweise 0,01 bis 0,95 Gew.-%, besonders bevorzugt 0,02 bis 0,5 Gew.-%, eines oder mehrerer Diaminoalkohole und die etwa äquivalente Menge Polycarbonsäure, vorzugsweise einer Dicarbonsäure, erfindungsgemäß einzusetzen. Die Zugabe der Diaminoalkohole und der Polycarbonsäuren kann getrennt oder gemeinsam, gegebenenfalls in wäßriger Lösung, erfolgen. Es ist vorteilhaft, die Diaminoalkohole und die Polycarbonsäuren vor oder zu Beginn der Reaktion hinzuzugeben. Neben den polyamidbildenden Komponenten sowie den Diaminoalkoholen (I) und den Polycarbonsäuren können auch weitere, bekannte Polyamid-Katalysatoren und -Beschleuniger, z.B. wie in der DE-A 3831707 aufgeführt, im Reaktionsgemisch enthalten sein.

Während äquivalente Mengen an Carbonsäuregruppen (bezogen auf die Aminogruppen der Diaminoalkoholkomponente) bevorzugt sind, können etwa Äquivalentmengen, z.B. 0,75 bis 1,10 Äquivalente, bevorzugt 0,85 bis 1,03 Äquivalente, insbesondere 0,90 bis 1,00 Äquivalente, an Carbonsäuregruppen auch verwendet werden.

Erfindungsgemäß ist es möglich, die Polykondensation sowohl diskontinuierlich als auch in kontinuierlicher Form, z.B. in Röhrenreaktoren, Ein- oder Zweiwellenextrudern, VK-Rohren, Autoklaven, gegebenenfalls unter Nachschaltung von Nachkondensationsgefäßen oder -reaktoren, durchzuführen. Erfindungsgemäß läßt sich z.B. die Polykondensationszeit (in Abhängigkeit von der jeweiligen Polykondensationstemperatur), um beispielsweise zu Polyamiden einer gewünschten Schmelzviskosität zu gelangen, auf die Hälfte der üblichen Polykondensationszeit reduzieren.

Die erfindungsgemäßen Polyamide haben im Vergleich zu bekannten Vergleichsprodukten bei vergleichbarer Lösungsviskosität (ηᵣₑₗ; 1 %ig in m-Kresol bei 25° C) charakteristisch höhere Schmelzviskositäten, zeigen eine ausgeprägte Strukturviskosität und von daher vermutlich eine andere (verzweigte ?) Struktur.

Die erfindungsgemäß hergestellten Polyamide können in bekannter Weise aus der Schmelze, vorzugsweise in ein Wasserbad, ausgetragen, gehäckselt, gegebenenfalls extrahiert und getrocknet werden.

Aus den Polyamiden können ebenso in bekannter Weise durch thermoplastische Verarbeitung Formkörper, Fasern, Folien oder andere Gegenstände hergestellt werden.

Gegebenenfalls können die so erhaltenen Diaminoalkoholmodifizierten (Co)Polyamide in fester Phase nachkondensiert werden, um das Molekulargewicht weiter zu erhöhen, wobei im allgemeinen auch eine deutliche Erhöhung der Schmelzviskosität eintritt und diese Nachkondensation beschleunigt erfolgt. Die Produkte bleiben aber überraschenderweise in m-Kresol löslich.

Zur Herstellung dieser hochmolekularen, verzweigten, aber in m-Kresol noch löslichen (Co)Polyamide durch Festphasennachkondensation können beliebige, durch Schmelzpolykondensation hergestellte, Diaminoalkoholmodifizierte (Co)Polyamide, wie beansprucht, eingesetzt werden; besonders geeignet sind Polyamide auf Basis von Polyamid-6 und Polyamid-66.

Die Reaktionszeit in der festen Phase bis zum Erreichen einer vorgegebenen (gewünschten) Schmelzviskosität ist gegenüber nicht Diaminoalkohol-modifizierten Polyamiden reduziert.

Geeignete Reaktionstemperaturen für die Nachkondensation liegen im Bereich von 140 bis 240° C, bevorzugt 150 bis 210° C, insbesondere 150 bis 200° C. Auf alle Fälle sollte die Reaktion mindestens 10° C, bevorzugt mindestens 20° C, unterhalb des Schmelzpunktes des jeweiligen Polyamids durchgeführt werden. Die Kondensationszeit kann zwischen wenigen Minuten und ca. 30 Stunden, bevorzugt zwischen 0,5 und 25 Stunden, gewählt werden. Sie beträgt insbesondere 5 bis 20 Stunden. Die längeren Reaktionszeiten sind dabei besonders bei den niedrigeren Nachkondensationstemperaturen zu verwenden, die kürzeren Reaktionszeiten entsprechen vorzugsweise den höheren Nachkondensationstemperaturen.

Alle üblicherweise für eine Festphasennachkondensation eingesetzten Vorrichtungen sind zur Herstellung der erfindungsgemäßen Polyamide geeignet. Bevorzugt werden bei diskontinuierlicher Arbeitsweise Taumeltrockner und Wendelmischer eingesetzt. Auch kontinuierliche Feststoffnachkondensationsverfahren sind zur Herstellung der erfindungsgemäßen Polyamide geeignet.

Die hochmolekularen, verzweigten Polyamide haben im Vergleich zu bekannten Vergleichsprodukten bei ähnlicher Lösungsviskosität (ηᵣₑₗ 1 %ig in m-Kresol bei 25° C) charakteristisch höhere Schmelzviskositätswerte und zeigen eine gewisse Strukturviskosität. Die hochmolekularen, offensichtlich verzweigten Polyamide sind geeignet für alle Anwendungen hochmolekularer Polyamide.

Das erfindungsgemäße Verfahren kann auch zur Herstellung von Polyamid-Konzentraten (Masterbatches) durch Polymerisation genutzt werden, bevorzugt so, wie es in der nicht vorveröffentlichten Patentanmeldung DE-A 3831707 der europäischen Patentanmeldung 360060-A1 beschrieben ist. Diese Konzentrate sind ebenfalls Gegenstand der Erfindung.

Die Polyamide können übliche Zusatzstoffe, z.B. Mattierungsmittel wie Titandioxid, bereits bei dem Herstellungsverfahren oder später zugemischt, enthalten. Übliche Zusatzstoffe sind beispielsweise Verarbeitungshilfsmittel (z.B. Gleit- und Entformungsmittel), Stabilisatoren aller Art, Füll- und Verstärkungsstoffe, Farbstoffe und Pigmente, ferner die bekannten Schlagzähmodifikator-Zusätze für Polyamide, die Wasseraufnahme verringernde Substanzen (bevorzugt Bis- und Polyphenole (insbesondere (Alkyl)phenol-Formaldehyd-Kondensate (Novolake)) u.a.m., wie sie im Stand der Technik beschrieben sind.

Die nachfolgenden Beispiele dienen zur Erläuterung der Erfindung ohne sie in irgendeiner Weise darauf einzuschränken. Die Schmelzviskositätswerte wurden mit einem Contraves RM 300 Platte-Kegel-Viskosimeter bei den angegebenen Temperaturen gemessen.

### Beispiel 1

10 kg ε-Caprolactam, 10 g N-(2-Hydroxyethyl)-ethylen-diamin (entspricht 0,1 Gew.-%, bezogen auf ε-Caprolactam-Menge), 14 g Adipinsäure und 1 l destilliertes Wasser werden in einen 25 l-Druckautoklaven eingewogen. Durch dreimaliges Aufdrücken von 3 bar Stickstoff und anschließendes Entspannen wird eine Stickstoffatmosphäre im Autoklaven erreicht. Man heizt zügig (ca. 90 Min.) auf 200° C auf und rührt unter Eigendruck 1 Stunde bei 200° C. Dann wird in ca. 2 Stunden auf Normaldruck entspannt, zügig auf 270° C aufgeheizt und dann 2 1/2 Stunden bei 270° C polykondensiert, wobei 40 l N₂/h übergeleitet werden. Man läßt absitzen und drückt das Polyamid mit Überdruck als Strang durch das Bodenventil in ein Wasserbad. Nach Granulieren und Extraktion mit destilliertem Wasser erhält man 8,2 kg Polyamid-6 mit einer relativen Viskosität (1 %ige Lösung in m-Kresol bei 25° C) von 3,6. Das Produkt hat eine Schmelzviskosität von 500 Pas bei 270° C und 1,25 s⁻¹.

### Beispiel 2

Analog Beispiel 1 wird ein Polyamid hergestellt aus 10,0 kg ε-Caprolactam, 5,0 g (0,05 Gew.-%, bezogen auf ε-Caprolactam) N-(2-Hydroxyethyl)-ethylendiamin, 7,0 g Adipinsäure und 1 l H₂O. Die Polykondensationszeit beträgt 2 1/4 Stunden. Man erhält 9,3 kg Polyamid-6 mit einer relativen Viskosität (1 %ige Lösung, m-Kresol, 25° C) von 3,9. Das Produkt hat eine Schmelzviskosität von 800 Pas bei 270° C und 1,25 s⁻¹.

### Vergleichsversuch 1

Analog Beispiel 1 wird ein Polyamid hergestellt, ohne die Zusätze von N-(2-Hydroxyethyl)-ethylendiamin und Adipinsäure. Man läßt aber 6 Stunden bei 270° C polykondensieren und erhält trotzdem nun ein Polyamid mit ηᵣₑₗ = 3,0. Das Produkt hat eine Schmelzviskosität von 200 Pas bei 270° C und 1,25 s⁻¹.

### Beispiel 3

90 g ε-Caprolactam, 10 g Aminocapronsäure, 0,10 g N-(2-Hydroxyethyl)-ethylendiamin und 0,14 g Adipinsäure werden in einen 250 ml-Rundkolben eingewogen. Nach zweimaligem Evakuieren und Entspannen mit Stickstoff wird unter Rühren in 15 Min auf 200° C aufgeheizt und 1 Stunde bei 200° C gehalten. Dann wird in 10 Min. auf 270° C erhitzt und 3,5 Stunden polykondensiert. Das Granulat wird mit destilliertem Wasser extrahiert. Das Polyamid hat eine relative Viskosität von 3,6. Die Schmelzviskosität (bei 250° C) beträgt 1.200 Pas bei einer Scherkraft von 1,2 s⁻¹.

### Vergleichsversuch 2

Beispiel 3 wird wiederholt mit dem Unterschied, daß kein N-(2-Hydroxyethyl)-ethylendiamin und keine Adipinsäure hinzugegeben werden. Die Polykondensationszeit beträgt 6 Stunden. Man erhält ein Polyamid-6 mit einer relativen Viskosität von 3,5 und einer Schmelzviskosität (bei 250° C) von 440 Pas bei einer Scherkraft von 1,2 s⁻¹.

### Vergleichsversuch 3

Beispiel 3 wird wiederholt mit dem Unterschied, daß keine Adipinsäure zugegeben wird. Nach 6 Stunden Kondensationszeit bei 270° C erhält man ein Polyamid-6 mit einer relativen Viskosität von 4,0. Das Produkt erscheint nicht ganz homogen (Gelanteile).

### Vergleichsversuch 4

Unter den Bedingungen des Vergleichsversuchs 3 erhält man ohne N-(2-Hydroxyethyl)-ethylendiamin und ohne Adipinsäure nach 6 Stunden ein Polyamid-6 mit ηᵣₑₗ = 4,1.

### Beispiel 4

71,6 Gew.-% Sebacinsäure, 41,1 g Hexamethylendiamin, 92 g N-(2-Hydroxyethyl)-ethylendiamin und 0,27 g Adipinsäure wurden in einen 250 ml-Rundkolben eingefüllt. Nach zweimaligem Evakuieren und Entspannen mit Stickstoff wurde in ca. 15 Min. auf 200° C aufgeheizt und eine Stunde bei 200° C vorkondensiert. Dann wird unter Rühren in ca. 15 Min. auf ca. 280° C aufgeheizt und 2,5 Stunden bei ca. 280° C gerührt. Man erhält ein Polyamid mit einer relativen Viskosität (ηᵣₑₗ, 1 %ig in m-Kresol bei 25° C) von 4,1. Die Schmelzviskosität des Polyamids bei 270° C und 0,9 s⁻¹ beträgt 5.400 Pas.

### Vergleichsversuch 5

Beispiel 5 wurde wiederholt, jedoch ohne Zusatz von N-(2-Hydroxyethyl)-ethylendiamin und Adipinsäure. Nach 2,5 Stunden wurde ein Polyamid mit einer relativen Viskosität 3,5 erhalten. Die Schmelzviskosität gemessen bei 270° C und 0,9 s⁻¹ beträgt 1.000 Pas.

### Beispiele 5 bis 9

Jeweils ca. 100 g N-(2-Hydroxyethyl)-ethylendiamin modifizierte ΔPA 6-Granulat, hergestellt nach Beispiel 1, wurden an einem Rotationsverdampfer im N₂-Strom verschiedene Zeiten (t) lang in der festen Phase nachkondensiert. Die Bedingungen waren: 50 Umin⁻¹ 170° C, 40 l N₂ h⁻¹.

In der Tabelle 1 sind die ηᵣₑₗ -Werte sowie die Schmelzviskositäten (SV) bei einer Temperatur von 270° C angeführt.

### Vergleichsversuch 6

Ein lineares, typisches PA 6 (ηᵣₑₗ = 3,7), dessen Schmelzviskosität in etwa der des in den Beispielen 5 bis 9 benutzten Granulats entsprach, wurde in der oben beschriebenen Weise 14 Stunden lang nachkondensiert. Es trat nur eine sehr geringe Molekulargewichtserhöhung auf (ηᵣₑₗ = 3,9). Die Schmelzviskosität war auch nach der Nachkondensation praktisch unverändert.

**Tabelle 1**

| Beispiel | t bei 170° C (in Stunden) | ηᵣₑₗ | SV (270° C; 1,2 s⁻¹) |
|---|---|---|---|
| 5 | 0 | 3,6 | 500 Pas |
| 6 | 3 | 4,1 | 1.070 Pas |
| 7 | 7 | 4,1 | 2.100 Pas |
| 8 | 10 | 4,2 | nicht bestimmt |
| 9 | 14 | 4,4 | 2.490 Pas |

## Patentansprüche

1. Verfahren zur Herstellung hochmolekularer, m-Kresol löslicher (Co)Polyamide auf Basis von Lactamen und/oder polyamidbildenden Diamin/Dicarbonsäure-Reaktionsgemischen und/oder Aminocarbonsäuren und Diaminoalkoholen unter Schmelzpolykondensationsbedingungen, gegebenenfalls zusätzlicher Festphasen-Nachkondensation, dadurch gekennzeichnet, daß der zu polymerisierenden, polyamidbildenden Mischung
a) 0,005 bis 0,99 Gew.-% eines oder mehrerer Diaminoalkohole der allgemeinen Formel (I) 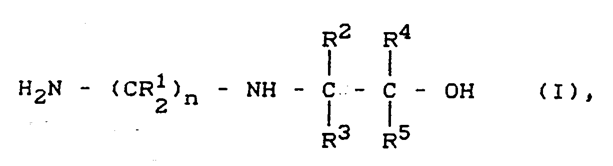 wobei
R¹, R², R³, R⁴ und R⁵ unabhängig voneinander Wasserstoff oder C₁-C₁₂-Alkyl bedeuten und zwei am gleichen oder benachbarten Kohlenstoffatom befindliche Reste R¹ und/oder R³ und/oder R⁵ auch Glieder eines 5 bis 12 Kohlenstoffatome zählenden Ringes sein können, und
n eine natürliche Zahl von 2 bis 22 ist, und
b) in zu den Aminogruppen von (I) etwa äquivalente Mengen einer oder mehrerer Polycarbonsäuren
zugesetzt werden und anschließend in üblicher Weise kondensiert wird.

2. Verfahren nach Anspruch 1, dadurch gekennzeichnet, daß 0,01 bis 0,95 Gew.-% an Diaminoalkoholen (I) zugesetzt werden.

3. Verfahren nach Ansprüchen 1 und 2, dadurch gekennzeichnet, daß in den Diaminoalkoholen (I) R¹, R², R³, R⁴ und R⁵ Wasserstoff oder Methylgruppen bedeuten.

4. Verfahren nach Ansprüchen 1 bis 3, dadurch gekennzeichnet, daß als Diaminoalkohol (I) das N-(2-Hydroxyethyl)-ethylendiamin zugesetzt wird.

5. Verfahren nach Ansprüchen 1 bis 4, dadurch gekennzeichnet, daß der Diaminoalkohol (I) und die in etwa äquivalente Menge mindestens einer Polycarbonsäure vor oder zu Reaktionsbeginn dem polyamidbildenden Reaktionsgemisch zugesetzt werden.

6. Verfahren nach Ansprüchen 1 bis 5, dadurch gekennzeichnet, daß 0,02 bis 0,5 Gew.-% Diaminoalkohol (I) zugesetzt wird.

7. Verfahren nach Ansprüchen 1 bis 6, dadurch gekennzeichnet, daß als Polycarbonsäuren (b) Dicarbonsäuren zugesetzt werden.

8. Verfahren nach Ansprüchen 1 bis 7, dadurch gekennzeichnet, daß die Diaminoalkohole (I)/Polycarbonsäuren enthaltenden Polyamide einer Festphasen-Nachkondensation (mindestens 10°C unterhalb des Schmelzpunktes) bei 140 bis 240°C und einer Reaktionszeit im Bereich von 0,5 bis 30 Stunden unterworfen werden.

## Claims

1. A process for the production of high molecular weight (co)polyamides soluble in m-cresol based on lactams and/or polyamide-forming diamine/dicarboxylic acid reaction mixtures and/or aminocarboxylic acids and diaminoalcohols under melt polycondensation conditions, optionally with additional solid-phase post condensation, characterized in that
a) 0.005 to 0.99% by weight of one or more diaminoalcohols corresponding to general formula (I): 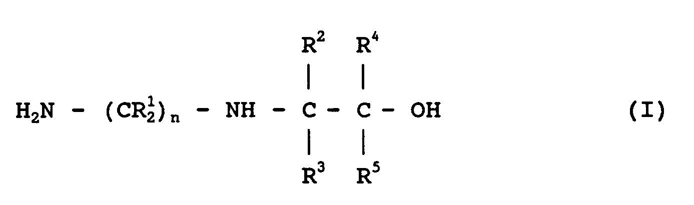 in which
R¹, R², R³, R⁴ and R⁵ independently of one another represent hydrogen or C₁₋₁₂ alkyl and two substituents R¹ and/or R³ and/or R⁵ situated at the same or an adjacent carbon atom can also be members of a ring containing 5 to 12 carbon atoms and
n is a natural number of 2 to 22,
and
b) one or more polycarboxylic acids in quantities substantially equivalent to the amino groups of (I)
are added to the polyamide-forming mixture to be polymerized which is then condensed in the usual way.

2. A process as claimed in claim 1, characterized in that 0.01 to 0.95% by weight of diaminoalcohols (I) are added.

3. A process as claimed in claims 1 and 2, characterized in that, in the diaminoalcohols (I), R¹, R², R³, R⁴ and R⁵ represent hydrogen or methyl groups.

4. A process as claimed in claims 1 to 3, characterized in that N-(2-hydroxyethyl)-ethylenediamine is added as the diaminoalcohol (I).

5. A process as claimed in claims 1 to 4, characterized in that the diaminoalcohol (I) and the at least substantially equivalent quantity of at least one polycarboxylic acid are added to the polyamide-forming reaction mixture before or at the beginning of the reaction.

6. A process as claimed in claims 1 to 5, characterized in that 0.02 to 0.5% by weight of diaminoalcohol (I) is added.

7. A process as claimed in claims 1 to 6, characterized in that dicarboxylic acids are added as the polycarboxylic acids (b).

8. A process as claimed in claims 1 to 7, characterized in that the polyamides containing diaminoalcohols (I)/polycarboxylic acids are subjected to solid-phase post condensation (at least 10°C below the melting point) over a period of 0.5 to 30 hours at a temperature of 140 to 240°C.

## Revendications

1. Procédé de préparation de (co)polyamides de haut poids moléculaire, soluble dans le m-crésol à base de lactames et/ou de mélanges réactionnels diamine/acide dicarboxylique formant des polyamides et/ou d'aminoacides carboxyliques et de diaminoalcools, dans des conditions de condensation en masse fondue, le cas échéant avec post-condensation en phase solide, caractérisé en ce qu'on ajoute au mélange à polymériser, formant des polyamides
a) 0,005 à 0,99 % en poids d'un ou plusieurs diaminoalcools de formule générale (I) 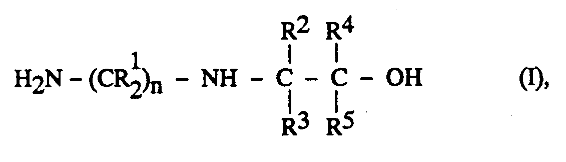 dans laquelle
R¹, R², R³, R⁴ et R⁵ représentent indépendamment l'un de l'autre l'hydrogène, un alkyle en C₁-C₁₂, et deux restes R¹ et/ou R³ et/ou R⁵ se trouvant sur le même atome de carbone ou sur des atomes de carbone voisins peuvent être aussi les éléments d'un cycle comptant de 5 à 12 atomes de carbone, et
n est un nombre entier de 2 à 22, et
b) dans des quantités à peu près équivalentes à celles des groupes amino de (I) d'un ou plusieurs acides polycarboxyliques
et ensuite on condense de manière usuelle.

2. Procédé selon la revendication 1, caractérisé en ce qu'on ajoute 0,01 à 0,95 % en poids de diaminoalcools (I).

3. Procédé selon les revendications 1 et 2, caractérisé en ce que dans les diaminoalcools (I) R¹, R², R³, R⁴ et R⁵ représentent l'hydrogène ou des groupes méthyle.

4. Procédé selon les revendications 1 à 3, caractérisé en ce qu'on ajoute comme diaminoalcools (I) la N-(2-hydroxyéthyl)-éthylènediamine.

5. Procédé selon les revendications 1 à 4, caractérisé en ce qu'on ajoute le diaminoalcool (I) et la quantité approximativement équivalente d'au moins un acide polycarboxylique avant ou au moment du début de la réaction au mélange réactionnel formant le polyamide.

6. Procédé selon les revendications 1 à 5, caractérisé en ce qu'on ajoute 0,02 à 0,5 % en poids de diaminoalcool (I).

7. Procédé selon les revendications 1 à 6, caractérisé en ce qu'on ajoute comme acides polycarboxyliques (b) des acides dicarboxyliques.

8. Procédé selon les revendications 1 à 7, caractérisé en ce qu'on soumet à une post-condensation en phase solide les polyamides contenant des diaminoalcools (I)/acides polycarboxyliques (au moins 10° C en dessous du point de fusion) entre 140 et 240° C et pendant une durée de réaction comprise entre 0,5 et 30 h.
